**Europäisches Patentamt**

**European Patent Office**

**Office européen des brevets**

(19)

(11) Publication number: **0 236 970**
**B1**

(12) # EUROPEAN PATENT SPECIFICATION

(45) Date of publication of the patent specification:
**27.12.90**

(51) Int. Cl.⁵: **B65H 51/10**

(21) Application number: **87103190.2**

(22) Date of filing: **06.03.87**

(54) Apparatus for pulling small-diameter fragile cable.

(30) Priority: **11.03.86 US 838653**

(43) Date of publication of application:
**16.09.87 Bulletin 87/38**

(45) Publication of the grant of the patent:
**27.12.90 Bulletin 90/52**

(84) Designated Contracting States:
**DE FR GB IT NL**

(56) References cited:
**DD-A- 104 060**
**DD-A- 113 732**
**GB-A- 1 324 874**
**US-A- 4 469 267**
**US-A- 4 508 251**

(73) Proprietor: WesTech Gear Corporation, 2600 East
Imperial Highway, Lynwood California 90262(US)

(72) Inventor: Franchuk, John M., 3806 - 191st Place, S.W.,
Lynnwood Washington 98036(US)

(74) Representative: Patentanwälte Grünecker, Kinkeldey,
Stockmair & Partner, Maximilianstrasse 58,
D-8000 München 22(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to an apparatus for pulling cables, according to the preamble of claim 1.

Such a prior art machine which forms the basis of the preamble of claim 1 is disclosed in the US Patent No. 4 469 267. In such a system, which relies on flexible track belts which squeeze or grip the cable, the high tension portion of the track belt provides the normal force required to transport the cable and the resilient nature of the gripping pads helps to deliver a uniform pressure over the surface area of the cable. A certain portion of the normal force is lost by deformation of the gripping pads due to their resiliency. This loss due to resilience occurs at a tolerable level when large-diameter cable is being hauled; however, when the cable has a relatively small diameter, as does electric cable, the loss due to deformation is large when compared with the resultant normal force applied to the cable.

Certain fragile cables, such as electric cable, fiberoptic cable, and the like are playing an increasingly important role in modern communication systems, extending over thousands of miles, often in submarine environments. Accordingly, there is a demand for machines and devices which aid in the hauling and laying of such cables. Particularly, there is a need for a machine which can haul and lay fragile, small-diameter cable quickly and economically.

Accordingly it is an object of the present invention to provide an apparatus which can deliver a normally force to small-diameter to allow pulling and hauling of same with negligible losses due to deformation of the belt material and which distribute the normal force over an area of the cable to avoid point loading and the likelihood of piercing or deforming fragile cable housing.

This object is solved by the characterizing clause of claim 1.

The present invention discloses an apparatus for pulling small-diameter, fragile cable, such as fiberoptics or electric cables, and the like. In the first preferred embodiment, the invention includes at least two resilient wheels having their axes of rotation parallel to each other and having their tread surfaces opposed to one another. The spacing between the axes of rotation of the wheels should be less than the sum of the radii of the wheels.

In the second preferred embodiment, the invention includes at least four resilient wheels having their axes of rotation parallel to each other and having their tread surfaces opposed to one another. The spacing between the axes of rotation of the first and third wheels should be less than the sum of the radii of the first and third wheels so that the tread surfaces of the first and third wheels press toward each other. Similarly, the spacing between the axes of rotation of the second and fourth wheels should be less than the sum of the radii of the second and fourth wheels so that the tread surfaces of the second and fourth wheels press toward each other.

In both preferred embodiments, the invention also includes at least two independent, endless, flexible bar assemblies. In the first preferred embodiment, one such bar assembly is entrained around the first wheel and the other bar assembly is entrained around the second wheel. In the second preferred embodiment, the first bar assembly is entrained around the tread surfaces of the first and second wheels, and the second bar assembly is entrained around the tread surfaces of the third and fourth wheels.

In either preferred embodiment, each bar assembly is comprised of a plurality of bars and a means for flexibly coupling the bars together. Each bar is defined by top and bottom surfaces which are substantially parallel to each other, said top surface being situated to face toward the tread surface of the wheel. The bars are rigid in their length, width and depth dimensions, which are defined as follows. The width dimension of a bar is defined as the dimension parallel to the transverse direction of the tread surface of a wheel and is approximately equal to the transverse measurement of the tread surface of the wheel. The length dimension of a bar is defined as the dimension parallel to the longitudinal direction of the tread surface of the wheel. The gap between successive bars is less than the length of each bar. Each bar is further defined by a leading edge which extends along the width direction of the bottom surface of the bar.

Each flexible bar assembly is frictionally engaged with the tread surfaces of each respective wheel. The rigidity of the bars is sufficient to transmit the resilient pressure of the wheel without bending the bar. The bar assemblies and wheels are adapted to engage and apply a frictional pulling force on opposite sides of a cable to transport the cable along a path of movement of the bars. The flexible means coupling bars together allows each bar to pivot about its leading edge to allow the bottom surface of the bar to press flat against the cable when the leading edge is pressed against the cable. Said flexible means may comprise an elastomeric belt and a means for fastening the bars to the belt, with the elastomeric belt in the gap between the bars providing the compliance to allow a leading edge of a bar to pivot and cause the entire bottom surface of the bar to press flat along the cable.

### Brief Description of the Drawings

Figure I is a side view of a single-wheel embodiment of the present invention.

Figure 2 is a sectional view of the relative positions of the bars in the flexible bar assembly.

Figure 3 is a side view of a dual-wheel embodiment of the present invention.

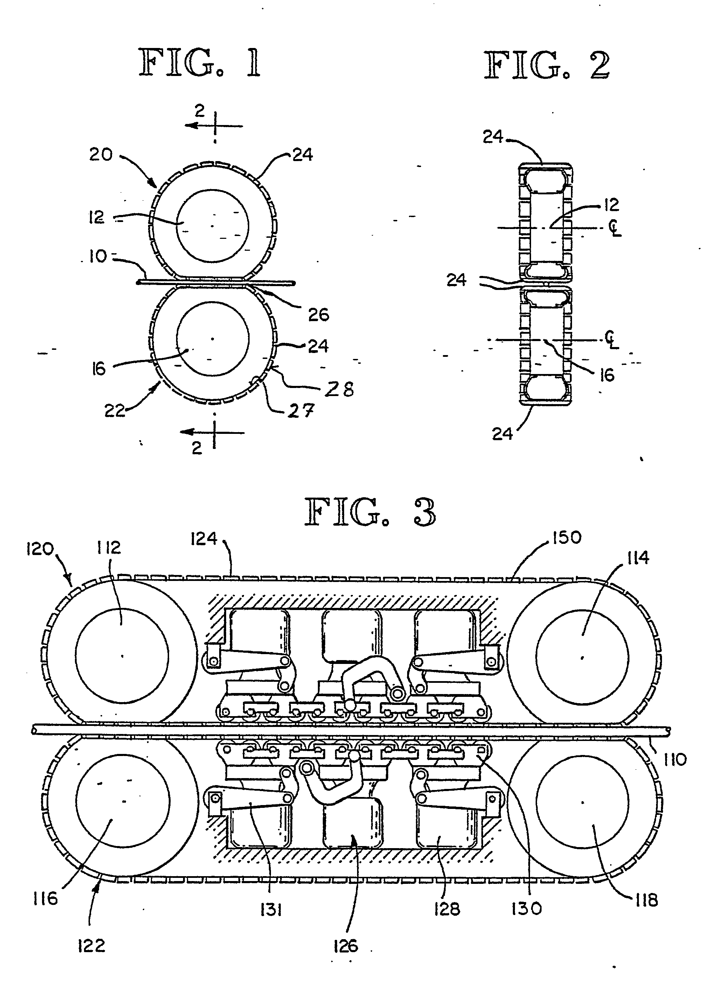

### Best Mode for Carrying Out the Invention

The present invention discloses an apparatus for applying tension to a small-diameter linear member, such as cable. More specifically, the invention is the means by which the tension forces are applied to the cable by the coaction of resilient wheels and rigid bars entrained around the wheels.

The invention may be practiced in at least two preferred embodiments. The first preferred embodiment is a single-wheel arrangement illustrated in Figure I. The second preferred embodiment is a dual-wheel arrangement shown in Figure 3. Figure 2 illustrates the relative position of bars, including the top and bottom surfaces of said bars, during operation of either preferred embodiment of the invention.

Referring to Figure I, the first preferred embodiment, or single-wheel arrangement, comprises a first wheel I2 and a second wheel I6. Each wheel has a resilient tread surface which may be manufactured, for example, from synthetic rubber or other such compliant materials.

The first and second wheels are aligned with each other so that their respective axes of rotation are parallel, and their tread surfaces oppose one another. The spacing between said axes of rotation may be adjusted to accommodate varying sizes of cable and should be adjusted so that it is less than the sum of the radii of the two wheels such that the respective tread surfaces of the wheels press toward each other and compress one another. The wheels operate in tandem to impart a squeeze force on a cable I0.

The single-wheel arrangement also comprises at least two flexible bar assemblies. The first bar assembly 20 is entrained around the first wheel I2, and the second bar assembly 22 is entrained around the second wheel I6.

As shown schematically in Figure 2, each bar assembly comprises a plurality of rigid bars and an elastomeric belt to which the bars are attached by rivets I50 or otherwise fixed to produce an independent, endless flexible assembly. The bars may also be coupled through use of a flexible link chain arrangement.

Referring to Figure 2, each bar 24 is defined by a top surface 27 and a bottom surface 28 which are substantially parallel to each other, where the top surface is situated to face toward the tread surfaces of the respective wheel and the bottom surface is situated to face away from the tread surface of the respective wheel. Each bar is sufficiently rigid in its three dimensions -- length, width and depth -- to transmit the resilient pressure of the respective wheel to the cable without bending or otherwise deforming the bar. Each bar may be rectangular in cross section, as shown schematically in Figure I.

The dimensions of each bar are defined as follows. The width dimension of a bar is defined as the dimension parallel to the transverse direction of the tread surface of the respective wheel. The width of the bar is approximately equal to the transverse measurement, or width, of the tread surface of the respective wheel. This ensures uniform pressure being applied across the entire width of the tread surface. The length dimension of a bar is defined as the dimension parallel to the longitudinal direction of the tread surface of the wheel at that portion of the tread surface to which the bar is frictionally engaged. The length of each bar is greater than the gap between successive bars. Such an arrangement assures a substantially continuous flat surface engagement on both sides of the cable. This is important because surface engagement which is substantially noncontinuous, or intermittent, could result in a bar on one assembly squeezing the cable into a gap in the opposing assembly to produce buckling or pinching of the cable and possible damage to or deformation of the cable.

Each bar is further defined by a leading edge 26 which extends along the width direction of the bottom surface of the bar. Each bar is secured to the elastomeric belt or link chain by bonding or by mechanical fasteners, such as rivets I50, shown schematically in Figure 3.

In operation, the first and second wheels rotate in opposing directions. The bar assemblies, being frictionally engaged with the wheels, approach each other from opposing directions. As the leading edge 26 of a bar comes into contact with the surface of the cable, the flexibility of the elastomeric belt or link chain arrangements allows the bar to pivot along its leading edge so that its entire bottom surface 28 comes into contact with the cable. As shown in Figure 2, the bars contacting the cable do so along the entire bottom surface area of the bar rather than along a line or at a point. Accordingly, the invention allows efficient transport of a cable without the danger of puncture or deformation of the cable due to point-loading. The bars thus deliver a uniform normal force to the cable by transferring the resilient force from the wheels to the cable without substantial loss of force due to resiliency of the wheels. The bars also ensure the application of a uniform normal force distributed over an entire surface to prevent problems of deformation.

The second preferred embodiment, or dual-wheel arrangement, is shown in Figure 3. This embodiment is constructed similarly to the single-wheel arrangement and includes at least two independent, endless, flexible bar assemblies. These two bar assemblies comply with the same specifications described in the discussion of the first preferred embodiment. The dual-wheel arrangement is different, however, in that it has at least four resilient wheels and the first bar assembly I20 is entrained around the first wheel II2 and the third wheel II4, while the second bar assembly I22 is entrained around the second wheel II6 and the fourth wheel II8. The first and third wheels are thus coupled by the first bar assembly, and the second and fourth wheels are coupled by the second bar assembly.

In operation, as in the first preferred embodiment, the rotating wheels drive the bar assemblies so that the bars on the respective assemblies approach the cable II0 from opposite directions. The flexibility of the bar assembly allows each bar to pivot about its leading edges as it comes in contact with the cable. The entire bottom surface of the bar then comes into contact with the cable and transfers the resilient pressure from the wheel to the cable. As Figure 2 demonstrates, the bars are parallel to each other as they apply pressure to opposite sides of the cable.

Referring again to Figure 3, the second preferred embodiment may include a tensioner arrangement I26 with a squeeze force system, such as a fluid film (pneumatic or hydraulic) slide or roller bearing. In the embodiment shown, a suitable squeeze force system includes conventional air bags or springs l28 coupled to rollers l30 by pivotal arms l3l. Other squeeze force systems may be of the form shown in U.S. Patent 4,469,267. The advantages of such a squeeze force system are low frictional drag and quiet operations. By using a low friction squeeze force system as shown, the frictional pull force on the cable is spread over all bars in contact with the cable, thus allowing greater pulling force to be applied without damaging the cable. Such advantages enhance this invention's dynamic response and overall system efficiency.

**Claims**

1. Apparatus for pulling cables, such as fiberoptics or electric cable or the like, comprising at least two wheels (12, 16) having their axes of rotation parallel to each other and having their tread surfaces opposed to one another, at least two independent, endless, flexible bar assemblies (20, 22), wherein the first bar assembly (20) is entrained around the tread surface of the first wheel (12) and the second bar assembly (22) is entrained around the tread surface of the second wheel (16), and wherein each bar assembly further comprises a plurality of bars (24), wherein each bar (24) is defined by a top and bottom surface (27, 28) with the bottom surface (28) being substantially flat, said top surface (27) being situated to face towards the tread surface of the wheel, with the width dimension of the bar (24) being defined as the dimension parallel to the transverse direction of the tread surface of the wheel (12, 16) and with the length direction of the bar (24) being defined as the dimension parallel to the longitudinal direction of the tread surface of the wheel (12, 16), wherein the gap between successive bars (24) is less than the length of each bar, each bar being defined by a leading edge (26) extending along the width of the bottom surface (28) of the bar (24), and a flexible coupling means for flexibly connecting the bars to each other and for pivoting a bar (24) about the leading edge (26) of the bar (24) to allow the bottom surface (28) of the bar to press flat against the cable (10) when the leading edge (26) is pressed against the cable (10) and wherein each bar assembly (20, 22) is engaged with the tread surface of each respective wheel and whereby the wheels (12, 16) bar assembly (20, 22) are adapted to engage and apply a frictional pulling force on the opposite sides of a cable (10) to transport the cable along a path of movement of the bars (24), characterized in that said at least two wheels (12, 16) are resilient, that said bars (24) are sufficiently rigid in their length, width and depth dimension to transmit the resilient pressure of the wheel (12, 16) without bending the bar (24) with the width dimension of the bars (24) being approximately equal to the transverse measurement of the tread surface of the wheel (12, 16), that each bar assembly (20, 22) is frictionally engaged with the tread surface of each respective resilient wheel (12, 16) and that the wheels (12, 16) press towards each other and compress one another.

2. Apparatus of claim 1, characterized in that at least four resilient wheels (112, 114, 116, 118) are provided and that the first bar assembly (120) is entrained around the tread surfaces of the first and third wheels (112, 114), and the second bar assembly (122) is entrained around the tread surfaces of the second and fourth wheels (116, 118).

3. The apparatus of claim 1 or 2, characterized in that said flexible coupling means is an elastromeric belt and includes a means (150) for fastening the bars to the belt, with the elastromeric belt in the gap between the bars providing the compliance to allow a leading edge (26) of a bar (24, 124) to pivot and cause the entire length of a bar (24) to press flat along the movement of the bars.

4. The apparatus of one of claims 1 to 3, characterized in that the spacing between the axes of rotation of the first and second wheels (12, 16, 112, 116) is less than the sum if the radii of the first and second wheels (12, 16, 112, 116) so that the tread surfaces of the first and second wheels press towards each other.

5. The apparatus of one of claims 2 to 4, characterized in that the spacing between the axes of rotation of the third and fourth wheels (114, 118) is less than the sum of the radii of the third and fourth wheels (114, 116) so that the tread surfaces of the third and fourth wheel press towards each other.

6. The apparatus of one of claims 2 to 5, further comprising a squeeze force means (126) on opposite sides of the path of movement of the bars (124) and between the first and third wheels (112, 114) and between the second and fourth wheels (116, 118) for applying a low friction pressure force on the flexible bar assemblies (120, 122) toward one another.

**Patentansprüche**

1. Vorrichtung zum Fördern von Kabeln, wie faseroptische oder elektrische Kabel oder dergleichen, mit mindestens zwei Rädern (12, 16), deren Drehachsen parallel zueinander und deren Laufflächen einander gegenüberliegend angeordnet sind, mit mindestens zwei unabhängigen, endlosen Gliederanordnungen ( 20 , 22 ), bei der die erste Gliederanordnung (20) um die Lauffläche des ersten Rades (12) und die zweite Gliederanordnung (22) um die Lauffläche des zweiten Rades (16) gelegt ist, und wobei jede Gliederanordnung ferner mehrere Glieder ( 24 ) umfaßt, von denen jedes Glied (24) durch eine obere und eine untere Fläche ( 27 , 28 ) begrenzt ist, wobei die untere Fläche (28) im wesentlichen flach ist, und die obere Fläche (27) zur Lauffläche des Rades weisend angeordnet ist, wobei die Breitenabmessung des Gliedes (24) durch die Abmessung parallel zur Querrichtung der Lauffläche des Rades (12, 16) und die Längsabmessung des Gliedes (24) durch die Abmessung parallel zur Längsrichtung der Lauffläche des Rades (12, 16) bestimmt ist, und wobei der Spalt zwischen aufeinander folgende Glieder ( 24 ) geringer ist als die Länge eines Gliedes, wobei jedes Glied von einer sich entlang der Breite der unteren Oberfläche (28) erstreckende Vorderkante (28) des Gliedes (24) begrenzt ist, und mit einer flexiblen Verbindungseinrichtung zum biegbaren Verbinden der Glieder miteinander und zum Schwenken eines Gliedes (24) um dessen Vorderkante, um der unteren Oberfläche (28) des Gliedes zu gestatten, sich flach gegen das Kabel (10) zu drücken, wenn die Vorderkante (26) gegen das Kabel (10) gepreßt wird, und wobei jede Gliederanordnung (20, 22) mit der Lauffläche des jeweiligen Rades in Eingriff ist und wobei die Räder (12, 16) und Gliederanordnung (20, 22) angepaßt sind, um an gegenüberliegenden Seiten eines Kabels (10) anzugreifen und eine Reibkraft aufzubringen, um das Kabel entlang des Bewegungsweges der Glieder (24) zu transportieren, dadurch gekennzeichnet, daß mindestens zwei Räder (12, 16) elastisch nachgiebig ausgebildet sind, daß die Glieder (24) in ihrer Längen-, Breiten- und Tiefenabmessung ausreichend starr sind, um den elastischen Druck der Räder (12, 16) ohne Durchbiegen der Glieder (24) zu übertragen, wobei die Breitenabmessung der Glieder (24) ungefähr der Querabmessung der Lauffläche des Rades (12, 16) entspricht, und daß jede Gliederanordnung (20, 22) im Reibschluß an der Lauffläche des jeweiligen elastisch nachgiebigen Rades (12, 16) angreift, und daß die Räder (12, 16) aufeinander zu und zusammengedrückt sind.

2. Vorrichtung nach Anspruch 1, dadurch gekennzeichnet, daß zumindest vier elastisch nachgiebige Räder (112, 114, 116, 118) vorgesehen sind, und daß die erste Gliederanordnung (120) um die Lauffläche des ersten und dritten Rades (112, 114) und die zweite Gliederanordnung (122) um die Laufflächen des zweiten und vierten Rades (116, 118) herumgelegt ist.

3. Vorrichtung nach Anspruch 1 oder 2, dadurch gekennzeichnet, daß die flexible Verbindungseinrichtung ein Elastomer-Gurt ist, und eine Einrichtung (150) zum Befestigen der Glieder an dem Gurt umfaßt, wobei der Elastomer-Gurt in dem Spalt zwischen den Gliedern die Möglichkeit vorsieht, daß die Vorderkante (26) eines Gliedes (24, 124) schwenken kann und daß die gesamte Länge eines Gliedes (24) gezwungen ist, sich entlang der Bewegung der Glieder flach anzudrücken.

4. Vorrichtung nach einem der Ansprüche 1 bis 3, dadurch gekennzeichnet, daß der Abstand zwischen den Drehachsen des ersten und des zweiten Rades (12, 16, 112, 116) kleiner ist als die Summe der Radien des ersten und des zweiten Rades (12, 16, 112, 116), so daß die Laufflächen des ersten und des zweiten Rades aufeinandergepreßt werden.

5. Vorrichtung nach einem der Ansprüche 2 bis 4, dadurch gekennzeichnet, daß der Abstand zwischen den Drehachsen des dritten und des vierten Rades (114, 118), so daß die Laufflächen des dritten und vierten Rades aufeinandergepreßt werden.

6. Vorrichtung nach einem der Ansprüche 2 bis 5, ferner umfassend eine Einrichtung (126) zum Aufbringen einer Andrückkraft auf den gegenüberliegenden Seiten des Bewegungsweges der Glieder (124) zwischen dem ersten und dritten Rad (112, 114) und zwischen dem zweiten und vierten Rad (116, 118) zum Aufbringen einer geringen Reibungskraft auf die flexiblen Gliederanordnungen (120, 122) aufeinander zu.

## Revendications

1. Appareil pour tirer des câbles, tels qu'un câble à fibres optiques ou un câble électrique ou analogue, comprenant au moins deux roues (12, 16) dont les axes de rotation sont parallèles entre eux et dont les surfaces de roulement sont opposées l'une à l'autre, au moins deux ensembles indépendants et sans fin (20, 22) de barres flexibles, le premier ensemble (20) de barres étant entraîné le long de la surface de roulement de la première roue (12) et le second ensemble de barres (22) etant entraîné le long de la surface de roulement de la seconde roue (16), chaque ensemble de barres comprenant en outre plusieurs barres (24), chaque barre (24) étant définie par des surfaces supérieure et inférieure (27, 28), la surface inférieure (28) étant sensiblement plate, ladite surface supérieure (27) étant située de façon à faire face à la surface de roulement de la roue, la dimension en largeur de la barre (24) étant définie comme étant la dimension parallèle à la direction transversale de la surface de roulement de la roue (12, 16) et la direction de la longueur de la barre (24) étant définie comme étant la dimension parallèle à la direction longitudinale de la surface de roulement de la roue (12, 16), l'intervalle entre des barres successives (24) étant inférieur à la longueur de chaque barre, chaque barre étant définie par un bord avant (26) s'étendant le long de la largeur de la surface inférieure (28) de la barre (24), et des moyens flexibles d'accouplement étant destinés à relier de façon flexible les barres entre elles et à faire pivoter une barre (24) autour du bord avant (26) de la barre (24) pour permettre à la surface inférieure (28) de la barre de s'appliquer sous pression à plat contre le câble (10) lorsque le bord avant (26) est appliqué sous pression contre le câble (10), chaque ensemble (20, 22) de barres étant en prise avec la surface de roulement de chaque roue respective et les ensembles de barres (20, 22) des roues (12, 16) étant conçus pour porter contre les côtés opposés d'un câble (10) et leur appliquer une force de traction par frottement pour transporter le câble le long d'un trajet de mouvement des barres (24), caractérisé en ce que lesdites, au moins deux, roues (12, 16) sont élastiques, en ce que lesdites barres (24) sont suffisamment rigides dans leurs dimensions en longueur, en largeur et en épaisseur pour transmettre la pression élastique de la roue (12, 16) sans courber la barre (24), la dimension en largeur des barres (24) étant approximativement égale à la mesure transversale de la surface de roulement de la roue (12, 16), en ce que chaque ensemble (20, 22) de barres est en contact de frottement avec la surface de roulement de chaque roue élastique respective (12, 16), et en ce que les roues (12, 16) exercent une pression l'une vers l'autre et se compriment mutuellement.

2. Appareil selon la revendication 1, caractérisé en ce qu'au moins quatre roues élastiques (112, 114, 116, 118) sont prévues, et en ce que le premier ensemble (120) de barres est entraîné le long des surfaces de roulement des première et troisième roues (112, 114) et le second ensemble (122) de barres est entraîné le long des surfaces de roulement des deuxième et quatrième roues (116,118).

3. Appareil selon la revendication 1 ou 2, caractérisé en ce que lesdits moyens flexibles d'accouplement comprennent une courroie élastomérique et des moyens (150) de fixation des barres à la courroie, la courroie élastomérique, dans l'intervalle entre les barres, fournissant la souplesse pour permettre à un bord avant (26) d'une barre (24, 124) de pivoter et amener une barre (24) à s'appliquer à plat sous pression sur toute sa longueur le long du mouvement des barres.

4. Appareil selon l'une quelconque des revendications 1 à 3, caractérisé en ce que l'écartement entre les axes de rotation des première et deuxième roues (12, 16, 112, 116) est inférieur à la somme des rayons des première et deuxième roues (12, 16, 112, 116) afin que les surfaces de roulement des première et deuxième roues pressent l'une vers l'autre.

5. Appareil selon l'une des revendications 2 à 4, caractérisé en ce que l'écartement entre les axes de rotation des troisième et quatrième roues (114, 118) est inférieur a la somme des rayons des troisième et quatrième roues (114, 118) de manière que les surfaces de roulement des troisième et quatrième roues pressent l'une vers l'autre.

6. Appareil selon l'une quelconque des revendications 2 à 5, comprenant en outre des moyens (126) à force de compression situés sur des côtés opposés du trajet de mouvement des barres (124) et entre les première et troisième roues (112, 114) et entre les deuxième et quatrième roues (116, 118) pour appliquer une faible force de pression de frottement sur les ensembles de barres flexibles (120, 122) l'un vers l'autre.

# FIG. 1

# FIG. 2

# FIG. 3